# EUROPEAN PATENT APPLICATION

(11) **EP 2 320 608 A1**
(43) Date of publication of application: **11.05.2011**
(21) Application number: 09306062.2
(22) Date of filing: 06.11.2009
(51) Int. Cl.: H04L 12/56

(54) **Method and system for implementing quality of service management in infiniband networks**

(71) Applicant: Thomson Licensing, 92130 Issy-les-Moulineaux (FR)
(72) Inventor: Glaeser, Frank, 30449, Hannover (DE)
(74) Representative: Lindemann, Robert

(57) **Abstract**

The present invention relates to a method (900) and a system for processing image data. The method includes receiving a request by a quality of service (QoS) manager from a user application to reserve bandwidth for transmitting data over the network (902). The method further provides for acquiring a network representation by the QoS manager from a subnet manager for evaluating network bandwidth for transmitting the data over the network (904). The method also performs the steps of sending a request by the QoS manager to the subnet manager to set network parameters if network bandwidth is available sufficient for transmitting the data over the network (908), and converting the network parameters by the subnet manager into subnet management packets (SMPs) (910). Finally, the method provides for allocating by the QoS the network, the bandwidth for transmitting the data (912).

## Description

The present invention relates to the field of computer networks. In particular, exemplary embodiments of the present invention relate to a method and system for providing and controlling resources and applications in computer networks.

In a computer network where large scale computer applications execute locally on specific sites, i.e., nodes, and/or where large data files transfer between the nodes, resource provisioning and allocation of bandwidth is critical to the proper operation of the network. For example, a multimedia postproduction facility may generally be used for processing multimedia data i.e., video, audio, animation and the like, such that user applications continually create, store and/or transfer large amounts of data using a communication network. Accordingly, in such computing facilities having sufficient network bandwidth for supporting smooth and continuous computational workflow in real-time for prolonged periods of time is a desirable attribute.

Such high performance computing settings may normally employ computer network technologies having switched fabrics providing connection between processor nodes, such as high performance processor, servers and/or storage devices. One such computer network technology is known as an Infiniband network. Generally, Infiniband networks offer point to point bidirectional serial links adapted to from connections between processors and/or other peripherals such as storage devices, gateways or the like.

Because the Infiniband topology operates in part by using switches for directing data flows between the various nodes, the Infiniband network incorporates a system known as Quality of Service, abbreviated "QoS" herein. Accordingly, the computer network utilizes the QoS for controlling data traffic and/or for the provisioning of resources, i.e., bandwidth, to network users. The QoS is further adapted to guaranty a desirable network performance, such as by providing optimal bit rates, while minimizing jitter, delay and/or bit error rate. While the QoS employs robust yet ridged protocols for maintaining a smooth and workflow of data, ever increasing computer network complexities require more elaborate algorithms for maintaining network performance efficient and stable.

A publication to Woo-Seop Rhee et al., entitled "Scalable Quasi-Dynamic-Provisioning-Based Admission Control Mechanism in Differentiated Service Network," published by ETRI Journal, Volume 26, Number 1, February 2004, purports to disclose scalable dynamic provisioning for admission control in DiffServe networks. The publication further purports to disclose a new scalable qDPM² mechanism based on a centralized bandwidth broker and distributed measurement-based admission control and movable boundary bandwidth management to support heterogeneous QoS requirements in DiffServ networks.

A Microsoft Power Point presentation to Brookhaven National Laboratory, entitled "USATLAS Tier 1 & Tier 2 Network Planning Meeting," presented on December 14, 2005, purports to disclose a project that is investigating integration and use of MPLS and LAN QoS-based differentiated network services in the ATLAS Data intensive distributed computing environment as a way to manage the network as a critical resource.

U.S. Patent Application Publication No. 2007/0201366 to Liu, entitled "System And Method Of Dynamic QoS Negotiation In Next Generation Network," filed on September 7, 2005, purports to disclose a system and a method of dynamic QoS negotiation in NGN. The reference discloses resource and admission control subsystem, abbreviated "RACS" herein, providing intercommunication interfaces with transport functional, abbreviated "TF" herein, entity, service control functional, abbreviated "SCF" herein, entities, and network attachment subsystem, abbreviated "NASS" herein. The reference further purports to disclose that when a user terminal in NGN develops a service with QoS requirement, the RACS is able to obtain the QoS requirement parameters of a service, determine the admission control decision parameters in accordance with the QoS requirement parameters. Accordingly, the RACS sends the determined admission control decision parameters to the TF entity for execution, such that the QoS assurance for the service is realized. This allows an end-to-end QoS negotiation in NGN, in accordance with the availability of current transport network resources. Further according to the reference, this can effectively improve the transport resource utilities.

International Patent Application Publication No. WO 02/100023 to Rogers, entitled "Real-Time Network Scheduled Packet Routing System," filed on June 4, 2002, purports to disclose a system for guaranteeing bandwidth for transmitting data in a network. According to the reference, a path generation engine determines data paths across the network according to preselected criteria. Further, the reference purports to disclose a scheduling engine for determining scheduling appointments for data packets to traverse each link in the network including compensation for transmission delays and switch latencies. Scheduling data is communicated to scheduling-aware switches and endpoints, so that appointment times are reserved for transmission of the scheduled data packets. Accordingly, the reference purports to disclose that real-time transmission of data can be guaranteed in both directions along the transmission path.

An improved method and system for managing data transfers over a network is desirable.

A method of transmitting data over a network according to exemplary embodiments of the invention is set forth in claim 1. The method comprises receiving a request by a quality of service manager from a user application to reserve bandwidth needed for transmitting data over the network. In so doing, the method acquires a network representation by the QoS manager from a subnet manager for evaluating network bandwidth for transmitting the data over the network. The method includes sending a request by the QoS manager to the subnet manager to set network parameters if network bandwidth is sufficient for transmitting the data over the network. If enough bandwidth is available to the network, then subnet manager converts the network parameters into subnet management packets, abbreviated "SMPs" herein. Finally, the method includes allocating bandwidth needed for transmitting the data, as performed by the QoS manager.

In one exemplary embodiment, the above method is implemented over a switched fabric network, such as an Infiniband communications network, for transmitting data between processing nodes. In such an embodiment, the QoS manager forms an extension to the subnet manager. Such an extension can be realized by implementing a communication interface, such as a transmission control protocol/internet protocol interface, abbreviated "TCP/IP" herein, interface, between the QoS manager and the subnet manger.

Another exemplary embodiment of the present invention provides a network for transmitting data between nodes of the network. The network includes at least one node adapted to send data over the network. The network further includes a quality of service manager adapted to receive requests from the node for reserving bandwidth needed to send the data over the network. To enable such data transfer, the network also includes a subnet manager adapted to provide a network representation of the network to the QoS manager for evaluating the network bandwidth. Accordingly, the subnet manager sets network parameters if network bandwidth is sufficient for transmitting the data over the network, and converts those parameters into subnet management packets. Finally, the QoS manager allocates the desired bandwidth for sending the data over the network.

Exemplary embodiments of the present invention are described with reference to the accompanying drawings. These exemplary embodiments merely exemplify the invention. Plural possible modifications are apparent to the skilled person. The gist and scope of the present invention is defined in the appended claims of the present application.
Fig. 1 is a network representation 100, in accordance with an exemplary embodiment of the present invention.
Fig. 2 is another general network representation 600, in accordance with an embodiment of the present invention.
Fig. 3 is a block diagram 700 of a network management arrangement, in accordance with an exemplary embodiment of the present invention.
Fig. 4 is an illustration of bandwidth allocation in a network, in accordance with an exemplary embodiment of the present invention.
Fig. 5 is a block diagram of a process flow 900, in accordance with an exemplary embodiment of the present invention.

Generally, an Infiniband network, also known as a switched fabric network, is adapted for accommodating many users employing high end computing, such as those found in multimedia post production facilities. In such settings, large media files are created, edited, archived and/or are continuously processed. To deal with such large demands for computing power and, consequently, for increasing usage of bandwidths, the Infiniband network distributes input/output, abbreviated "I/O" herein, devices throughout the network. Hence, certain high end processors, large scale storage devices, gateways and the like, which would otherwise be inside servers, are disposed at locations outside the server at various locations in the network. For example, in an Infiniband network, the I/O devices, such as gateways, may be separate from processors and/or memory devices, so as to provide network users connection flexibility, as well as scalability. This also enables devices/users to simultaneously communicate rather than wait for communication between certain users to cease, which could otherwise overwhelm the network. Accordingly, one of the hallmarks of Infiniband networks, as brought on by some of the aforementioned features, is an ability to provide bandwidth magnitudes significantly greater, typically by orders of magnitude, than other existing I/O architectures.

Still, the advantages offered by a switched fabric network, such as an Infiniband network, also come with a burden of increased network complexity. Indeed, the capabilities to transfer, process, and store large amounts of data require that the network have a robust management infrastructure, such as one provided by a QoS manager of the Infiniband network. In accordance with embodiments of the present invention, the QoS manager is adapted to continuously monitor demands of network user applications for bandwidth. In response to such demands, the QoS manager, through a subnet manager, as described below, is further adapted to reserve appropriate network resources to provision the requested bandwidth so as to enable data transfer. Moreover, the technical effect provided by exemplary embodiments of the invention includes the dynamic provisioning and allocation of bandwidth within a general communications network for ensuring its proper, continuous real-time and efficient operation.

While traditionally the QoS manager has been implemented as part of what is known as a "subnet manager," exemplary embodiments of the present invention implement the QoS manager as an extension to the subnet manager. Hence, such an implementation facilitates a dynamic operation of the QoS manager to provision bandwidth according to current real-time needs of the network. In other embodiments of the present invention, the QoS manager may be implemented as a server application having a TCP/IP interface for establishing communication between I/O servers, processing and storage nodes, and the subnet manager, all of which are part of the switched fabric Infiniband network.

As will be described further below, the QoS manager, as implemented through the TCP/IP interface, is adapted to receive requests for bandwidth reservations from the network user applications. Accordingly, the QoS manager acquires a network representation to ascertain network loads, as well as determine available paths within the network for transferring data between user applications and/or between other processing and storage nodes of the network. Based on the acquired network representation, the QoS manager defines a set of parameters prescribing the bandwidth allocation and the particular paths along which the data transfer is executed within the network.

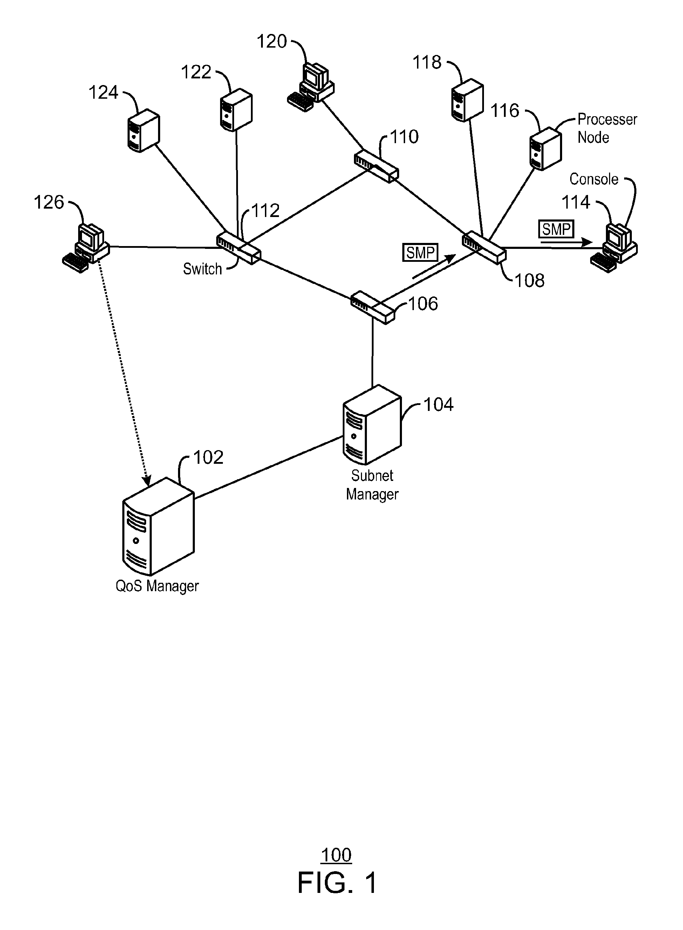

Fig. 1 is a network representation 100, in accordance with an exemplar embodiment of the present invention. It should be borne in mind that the following discussion pertains to an exemplary topology of switched fabric networks. Therefore, the ensuing discussion is intended to illustrate the main components, structure and functionality of such a network and is not intended to limit the invention and/or variations thereof to the embodiments described below. Accordingly, the network 100 may form an Infiniband network providing communication links between processing nodes, such as large storage devices and/or high-end application computing platforms, used for storing and processing large data files, respectively. The illustrated network 100 may form a point-to-point switched architecture in which data paths for traversing the network are established through multiple switches connecting the multiple nodes to from a fabric network.

As illustrated, the network 100 includes a QoS manager 102 coupled to a subnet manager 104. The subnet manager 104 is coupled to a switch 106, which in turn is coupled, directly and/or indirectly, to a plurality of switches 108, 110 and 112. The plurality of switches 106-112 form a fabric, also known as the Infiniband subnet of the network 100. The Infiniband subnet is configured to establish links between various nodes and/or user applications of the network 100. For example, the switch 108 may couple to a console 114 serving as a host to a user application running high-end computing platforms. The switch 108 may further couple to processing nodes or I/O devices 116 and/or 118. Accordingly, the processing nodes 116 and/or 118 may form storage subsystems for archiving data or, alternatively, those nodes may form gateways to other networks, such as Ethernet, fiber channels, adapted to couple the network 100 to additional outside networks and/or resources.

Similarly, in the illustrated exemplary embodiment of Fig. 1, the switch 110 is connected to the switches 110 and 112, as well as to a console 120 similar to the console 114. Further, the switch 112 of the network 100 couples to the switch 110 and to the switch 106. The switch 112 also couples to processing nodes 122, 124 and console 126. The processing nodes 122, 124 and the console 126 may be similar to the processing nodes 116, 118 and console 114, respectively, as described above. As further illustrated, the console 126 is coupled to the QoS manager for requesting bandwidth allocation to accommodate data transfers between the aforementioned consoles and/or the various processing nodes. In other words, in utilizing the applications, gateways and/or storage devices, users may access the QoS manager to facilitate the aforementioned data transfers between the various nodes.

The skilled person will appreciate that in a fabric network, such as in the network 100, communication between the switches 106-112 and the respective nodes, i.e., processing nodes 114 116, 118, etc., is generally provided through a host channel adapter, abbreviated "HCA" herein. Accordingly, the HCA is an interface that resides within a node and communicates directly with the node's memory and processor, as well as with the Infiniband fabric. The HCA guarantees delivery of data between the nodes as the data traverses the fabric. The HCA is also adapted to perform advanced memory access and to recover from transmission errors. The skilled person will also appreciate that the communication network 100 also employs target channel adapters, abbreviated "TCAs" herein, residing within the nodes. Generally, a TCA is adapted to enable I/O devices, such as disks or storage devices, to be located within the network independent of a host computer. For example, the TCA includes an I/O controller operating in conjunction with protocols specific to devices in which the protocols are implemented. As described below, such protocols may include TCP/IP -type protocols used to communicate between the QoS manager and the nodes of the network 100 during the requesting and provisioning of bandwidth within the network 100.

Referring again to the subnet manager 104, generally run as server application, the subnet manager 104 is responsible for configuring the local subnet of the network 100 to ensure its continued operation. The responsibilities of the subnet manager 104 include managing switch and router setups and reconfiguring the subnet, as may happen when exiting links goes down or new ones are added. In accordance with exemplary embodiments of the present invention and as will be described further below, the subnet manager 104 receives, via a TCP/IP interface, parameter set requests from the QoS 102 to route data between certain processing nodes. Generally, the QoS 102 manager receives requests from user application requiring data transfers between nodes. Before the requested data transfers can be executed, the QoS manager 102 and the subnet manager 104 work in tandem to provision the needed bandwidth within the network. Moreover, the cooperation between the above-mentioned managers ensures that such provisioning is properly executed and that routing of the data within the network is performed smoothly and efficiently.

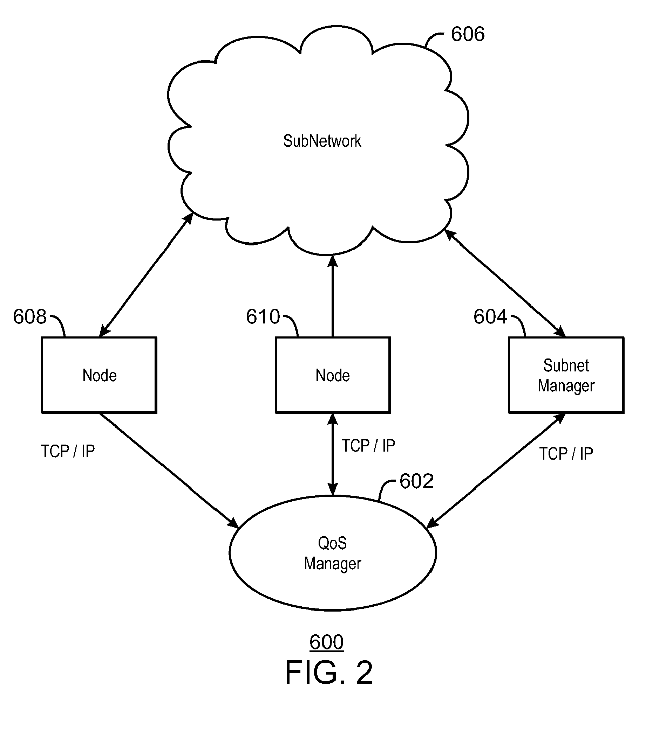

Fig. 2 is another general network representation 600, in accordance with an exemplary embodiment of the present invention. The network representation 600 illustrates some of the components forming the switched network 100, discussed above with reference to Fig. 1. Accordingly, the switched network 600 includes a QoS manager 600 coupled to a subnet manager 604. Further, the subnet manager 604 is coupled to a subnet network 606. The subnet network 606 may include multiple nodes, such as processing nodes and storage devices adapted to store data files and run various high-end computing applications, respectively. The network 606 may also include a subnet formed out of a series of switches and/or routers adapted for establishing connection between the nodes, and for enabling the transfer of data between the various nodes of the network 600. In addition, the network 606 is coupled to user applications 608 and 610, both of which are coupled to the QoS manager 602. While the embodiment may illustrate two nodes as being coupled to QoS manager 602, it should be borne in mind that other nodes exist within the network 606, such that those nodes may be coupled, either directly or indirectly, to the QoS manager 602 as well.

As illustrated by Fig. 2, the QoS manager 602 forms a dynamic extension to the subnet manager 604. As further illustrated, connection between the QoS manager 602 and the subnet manager 604 is established via a TCP/IP interface. Similarly, the nodes 608 and 610 may also connect the QoS manger by using a similar TCP/IP interface. Apart from offering layered functionalities, the TCP/IP interface enables a dynamic real-time implementation of the QoS manager 602 within the general network 600. Thus, the TCP/IP interface enables the QoS manager to receive real-time requests for bandwidth allocation from user applications, such as those provided by the nodes 608 and/or 610. Generally, such requests are first processed by the QoS manager 602 to determine availability of bandwidth within the network. Once availability is confirmed, the desired bandwidth is reserved, after which the QoS manager 602 instructs the subnet manager 604 to set specific parameters within the network devices, i.e., nodes, for enabling the transfer of data.

More specifically, to transfers data between nodes, i.e., between the nodes 608, 610, a certain amount of bandwidth is typically needed to ensure a reliable data transfer. Stated otherwise, the user application requests the QoS manager 602 to reserve the desired bandwidth, so that minimal data is lost and that the transfer is executed within a reasonable amount of time. Hence, the QoS manager 602, through the TCP/IP, intakes the request to initially evaluate the network resources needed to perform the desired transfer at a given bandwidth. In so doing, the QoS manager ascertains a representation of the network to determine what possible paths could be used to transfer the data. For instance, in one embodiment, the QoS manager 602 may utilize the subnet manager 604 for sending SMPs to inquire the general status of the various nodes and/or switches within the network. Such inquiries may indicate whether the nodes or switches are free to handle data transfer, or indicate that those devices are busy, for example, due to network congestion.

After the QoS manager 602 acquires a representation of the available network topology, the QoS manager 602 may compute possible paths for sending the data over the network 600. In so doing, the QoS manager may employ various optimization algorithms while taking into account current network conditions, such as bit error rates, jitter, delay, bit rate and the like for determining the time and the manner by which the transfer can be executed. Thereafter, the QoS manager may reserve the desired bandwidth and request the subnet manager 604 to define a path within the network for facilitating the data transfer.

To define the path for transferring the data, the Infiniband network makes use of specific designations associated with fields appearing in data packets for classifying the type of service and priority assigned to the data to be transferred. For example, the QoS manager 602 may direct, via the TCP/IP interface, the subnet manager to provide a field, such as part of a packet header, for designating a class of service, known as a service level, abbreviated "SL" herein, field. The skilled person will appreciate that based network loads and switching availability, the SL field, typically forming a fourbit field in a header of a packet, can be used by the subnet manager as an administrative tool to define the mapping of data transfers across the network. Other fields, such as virtual lanes, abbreviated "VL" herein, may also be defined by the subnet manager 604 through corresponding directives provided by the QoS manager 602. For example, a VL may form a set of receive and transmit logical links, such as packet buffers, associated with a particular node, such as the node 608 and/or the node 610. Thus, a data packet traversing the network 606 between the nodes 608 and the node 610 has a VL field associated with a logical link number indicating from where the packet originated.

Further, as the data packet transits between switches of the subnet network 606, the packet may transfer from one VL to another VL. To facilitate such transfers, each switch in the general network 600, or the switches 106-112 shown in Fig. 1, contains a table, which may be referred to as an arbitration table, for mapping SL fields to VL fields. Thus, for a switch that receives and outputs a data packet, the arbitration tables can be used to select a VL suitable for advancing the packet throughout the network. This selection is based on the packet's SL, specifically corresponding to the switch from where the packet was received and to the switch to where the packet is destined. Such mappings between VLs permit the general interoperability of switches forming the network 600.

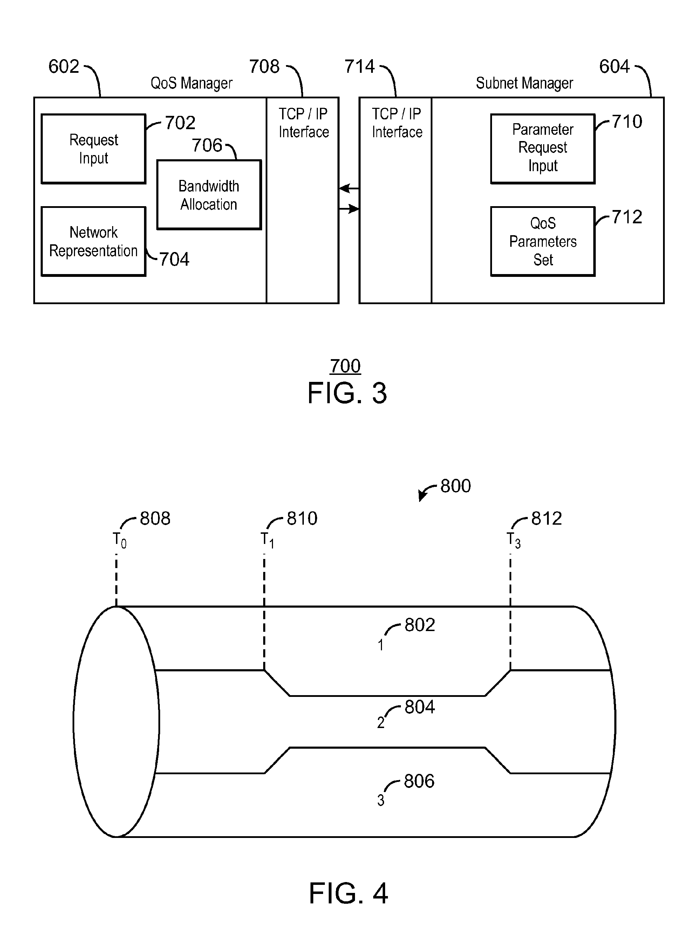

Fig. 3 is a block diagram 700 of network management arraignment, in accordance with an exemplary embodiment of the present invention. The block diagram 700 generally represents the QoS 602 and the subnet manager 604 of the Infiniband network 600 discussed above with reference to Fig. 2. The block diagram 700 further illustrates components of the QoS manager 602 and the subnet manager 604, as well as the manner by which those components operate relative to one another.

Accordingly, the QoS manager 602 includes a request input block 702, a network representation block 704 and a bandwidth allocation block 706. The QoS manager 602 also includes a TCP/IP interface block 708. Similarly, the subnet manager 604 includes a parameters request input block 710, a QoS parameters set block 712 and a TCP/IP interface block 714.

User requests for transmitting data packets throughout the network 600 may generally arrive at the request input block 702 of the QoS manager 602. Upon receiving such requests, the QoS manager 602 acquires a representation of the Infiniband network, i.e., network 600, via the network representation block 704. The block 704 may communicate with the subnet manager 604, via the TCP/IP interfaces 708 and 714, to inquire resources that may be available to the network 600 for transmitting the requested data. Such inquiry may evaluate portions and elements of the Infiniband network, for example, those portions of the network that have relatively light loads and are available to the user application for transmitting the data.

Hence, once the QoS manager 602 obtains network capacity for handling the request, bandwidth allocation block 706 reserves appropriate bandwidth within the network for complying with the request. If bandwidth cannot be reserved due to network overloads or other constraints, the QoS manager, via the block 702, may inform the user on the unavailability of the network to handle the request. In so doing, the QoS manager 602 may offer the user several options such as, for example, placing the user on a queue until bandwidth becomes available, or requesting the user to try again at a different time.

When network availability is feasible and bandwidth reservation is performed, via the block 706, the QoS manager 602 communicates with the subnet manager 604 to set network parameters for facilitating the data transfer requested by the user. Again, such communication between the aforementioned network managers may be done through the TCP/IP interfaces 708 and 714. Accordingly, the parameters request input block 710 of the subnet manager intakes the requests from the QoS manager 602 for setting network parameters. More specifically, such parameters request may include requests for setting SLs and VLs, as well as mapping VLs to corresponding SLs through the usage of the arbitration tables. In response to such requests, the QoS parameters set block 712 of the subnet manager 604 sets the aforementioned parameters and utilizes the VLs arbitration table for assigning VLs to the various data packets based on their respective SLs. The network parameters are then converted by the subnet manager 604 into SMPs, ultimately distributed throughout the switches of the Infiniband network.

Once network parameters are set, the subnet manager 604 sends a confirmation message, via the TCP/IP interfaces 708 and 714, informing the QoS manager 602 on the completion of the parameter setting. Upon receiving such confirmation, the QoS manager 602 administers the desired bandwidth for transmitting the data. Thereafter, the QoS manager 602 notifies the user application that the network is available and ready to comply with the request.

Fig. 4 is an illustration of bandwidth allocation in a network, in accordance with an embodiment of the present invention. More specifically, the figure depicts a tube-like structure representing bandwidth 800 available to a network, such as the Infiniband network, such as the network 600 discussed above. As further illustrated, the bandwidth 800 is sectioned in to portions 802, 804 and 806, representing varying amounts of bandwidth available to the Infiniband network allocated to various data types at different points in time. For example, the portion 802 may represent local area network, abbreviated "LAN" herein, data, while the portion 804 may represent storage-type data. By further example, the portion 806 may represent high performance computing, abbreviated "HPC" herein, data. The network may accommodate other types of data, such that the representation 800 may be sectioned into additional portions representing amounts of bandwidth required by those data types to traverse the network 600.

Fig. 4 further illustrates a real-time sequential status of the bandwidth 800 within a general Infiniband network, as shown by reference numerals 808, 810 and 812. Thus, for example, at the instance 808 the portion 802 may make up 20 percent of the bandwidth, while portions 804 and 806 may each make up 50 and 30 percent, respectively, of the bandwidth 800. Under the dynamic implementation of bandwidth allocation, as executed by the QoS manager, for example, 602, Fig. 3, the bandwidth composition of the network may vary according user application needs. For instance, at the time 810, the network may experience an increase in LAN data usage with high priority, such that the bandwidth of the portion 802 may increase to 40 percent, while the bandwidth of the portion 804 may decrease to 20 percent of the bandwidth 800. Similarly, at the time 810, the bandwidth of the portion 806 may increase to 40 percent as well. At the time 812, the allocation of bandwidth to the portions 802, 804 and 806 may be altered once again according to user application usage and priority of sending data over the Infiniband network occurring at the time 812.

Hence, Fig. 4 illustrates the dynamic allocation of bandwidth within a network, such as the Infiniband network 100 and/or 600 discussed above. Such a dynamic bandwidth allocation scheme is facilitated by the QoS manager and the subnet manager, for example, 602 and 604, respectively. Particularly, the communication between the QoS manager and the subnet manager, as facilitated by their corresponding TCP/IP interfaces, provides a robust and reliable communication link enabling the dynamic and efficient provisioning of bandwidth between different user applications of the network.

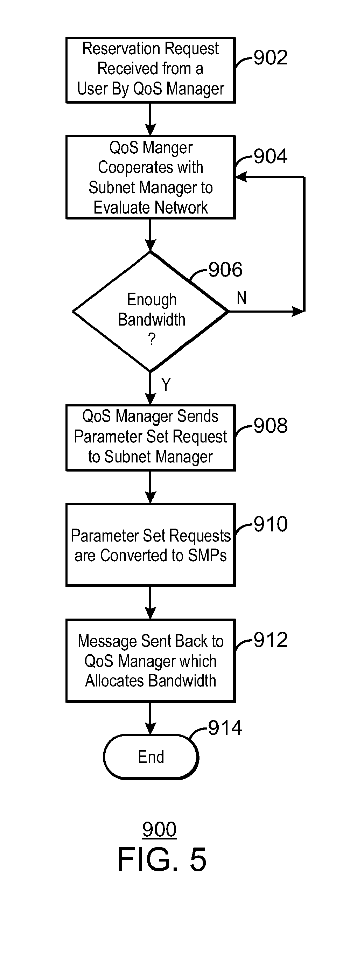

Fig. 5 is a block diagram of a process flow 900, in accordance with an exemplary embodiment of the present invention. The process flow 900 describes dynamic bandwidth allocation within an Infiniband network, via the QoS and subnet managers, as described above. Accordingly, the process flow 900 begins at block 902, where a user application sends a request for transmitting data over the Infiniband network. The QoS manager receives the request and initiates a process to further the request. Hence, at block 904, the QoS manager, for example 602 of Fig. 3, acquires a network representation to determine network availability for handling the request. In so doing, the QoS manager may cooperate with the subnet manager, for example 604 of Fig. 3, through a TCP/IP interface for ascertaining a real-time assessment of the capacity of the network to transfer data in accordance with the request of the user application.

It is to be noted that the QoS manager, instead of acquiring a network representation with each request, may as well acquire a network representation upon starting up. Any change in the network may then be communicated to the QoS manager, e.g. by the subnet managers. This allows for a faster handling of the resources because the QoS manager has a valid network representation available at any time.

From block 904, the process flow advances to decision block 906. If the network representation acquired by the block 904 indicates that enough bandwidth is available to carry out the request, the process flow proceeds to block 908. However, if the network representation indicates that there is insufficient bandwidth, the process flow returns to block 904. At this point the user application may be notified by the QoS manager on the insufficient bandwidth resources available to the network for executing the request. The user may be prompted to wait for network resources to free up or to resubmit the request at a later time.

Returning to block 908, the QoS manager sends, via the TCP/IP interface, a parameter set request to the subnet manager for setting certain network parameters. Such setting operations include assigning SLs and VLs, as well utilizing arbitration tables for mapping SLs to VLs of data packets throughout the switches of the Infiniband network. From block 908, the process flow proceeds to block 910 where the subnet manager converts the parameters set requests to SMPs across the switched network. The SMPs enable the transfer of the requested data across the network in accordance with the bandwidth allocated by the QoS manager. Next, at block 912, the subnet manager sends, via the TCP/IP interface, a message back to the QoS manager indicating that parameters are set and that the SMPs have been implemented as requested. Accordingly, the QoS manager allocates the required bandwidth for transmitting the data. At this point the data is ready to be sent over the Infiniband network and the process flow ends at block 914.

The skilled person will appreciate that combining any of the above-recited features of the present invention together may be desirable.

## Claims

1. A method (900) of transmitting data over a network, comprising:
receiving a request by a quality of service (QoS) manager from a user
application to reserve bandwidth for transmitting data over the network (902);
acquiring a network representation by the QoS manager from a subnet
manager for evaluating network availability for transmitting the data over the network (904);
sending a request by the QoS manager to the subnet manager to set
network parameters if the network is available for transmitting the data over the network (908);
converting the network parameters by the subnet manager into subnet
management packets (SMPs) (910);and
allocating by the QoS manger the bandwidth for transmitting the data
(912).

2. The method (900) of transmitting data over a network according to claim 1, wherein the network comprises a switched fabric network.

3. The method (900) of transmitting data over a network according to claim 2, wherein the switched fabric network comprises an Infiniband network.

4. The method (900) of transmitting data over a network according to claim 1, wherein the QoS manager forms an extension to the subnet manager.

5. The method (900) of transmitting data over a network according to claim 1, wherein the QoS manager communicates with the subnet manager via a Transmission Control Protocol/Internet Protocol Interface (TCP/IP) interface.

6. The method (900) of transmitting data over a network according to claim 1, wherein the network parameters comprise a service level (SL) fields, virtual lane (VL) fields, mappings between the VL fields and the SL fields and VL arbitration table entries.

7. The method (900) of transmitting data over a network according to claim 6, wherein the mappings between the VL fields and the SL fields is done via VLtoSL table entries in involved switch devices..

8. A network (100) for transmitting data between nodes, comprising:
at least one node adapted to send data over the network (116);
a quality of service (QoS) manager adapted to received requests from
the at least one node for reserving bandwidth to send the data over the network (102);
a subnet manager adapted to provide a network representation of the
network to the QoS manager for evaluating the network bandwidth; wherein the subnet manager sets network parameters if the network is available for transmitting the data over the network, and wherein the subnet manager converts those parameters into subnet management packets (SMPs) (104); and
wherein the QoS manager allocates the bandwidth for sending the data
of the network.

9. The network (100) for transmitting data between nodes according to claim 8, wherein the QoS manager forms an extension to the subnet manager.

10. The network (100) for transmitting data between nodes according to claim 8, wherein the QoS manager communicates with the subnet manager via a Transmission Control Protocol/Internet Protocol Interface (TCP/IP) interface.

11. The network (100) for transmitting data between nodes according to claim 8, wherein the network is a switched fabric network.

12. The network (100) for transmitting data between nodes according to claim 11, wherein the switched fabric network is an Infiniband network.

13. The network (100) for transmitting data between nodes according to claim 8, wherein the at least one node and the QoS manager communicate via a Transmission Control Protocol/Internet Protocol Interface (TCP/IP) interface.

14. The network (100) for transmitting data between nodes according to claim 8, wherein the at least one node is adapted to run user applications.
